(19)

Europäisches
Patentamt
European
Patent Office
Office européen
des brevets

(11) **EP 2 489 875 A2**

(12) **EUROPEAN PATENT APPLICATION**

(43) Date of publication:
**22.08.2012 Bulletin 2012/34**

(51) Int Cl.:
*F03G 7/10* $^{(2006.01)}$

(21) Application number: **12000881.8**

(22) Date of filing: **10.02.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **17.02.2011 IT TO20110134**

(71) Applicant: **Leghi, Alessandro
24040 Bonate Sotto (BG) (IT)**

(72) Inventor: **Leghi, Alessandro
24040 Bonate Sotto (BG) (IT)**

(74) Representative: **Garavelli, Paolo
A.BRE.MAR. S.R.L.
Via Servais 27
10146 Torino (IT)**

(54) **Improved turbine**

(57)    A turbine (1) is described, comprising a supporting structure, at least one motor (M) supported by such supporting structure, at least one power supplying means (A), at least one rotary shaft (AB) or bar (B), at least one fixed wheel (R) connected to such motor (M), at least one power-reduction wheel (R') connected to such power supplying means (A), at least one first reducer (RM) interposed between such motor (M) and such fixed wheel (R) and a second reducer (RM') interposed between such power supplying means (A) and such reduction wheel (R').

FIG. 4

**Description**

The present invention refers to an improved turbine.

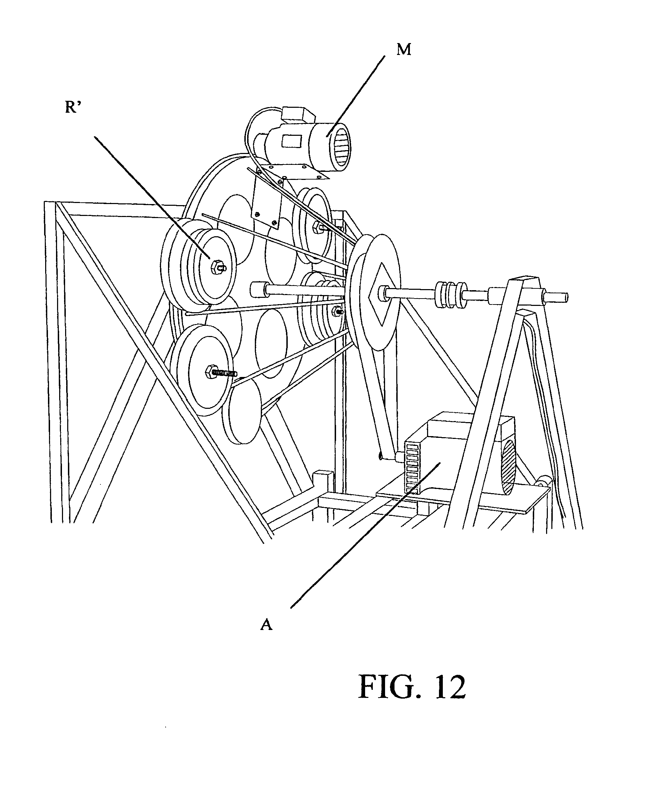

Various types of turbines are known in the art, with higher or lower efficiencies, that the turbine of the present invention aims to substantially improve. IT1344889 and WO/2005/047695, in the name of the same Applicant of the present invention, disclose a prior art turbine, that is shown in Figure 12, in its electric version, that demonstrates and supports the principles of physics on which the two above documents are based. The mechanical energy measures obtained are included at the end of the present description. With such solution, experimental electric energy measures can be obtained, by coupling an alternator, through a suitable reducer, directly to the turbine shaft.

Object of the present invention is providing a turbine that has further improvements with respect to prior art turbines in terms of offered efficiency.

The above and other objects and advantages of the invention, as will appear from the following description, are obtained with an improved turbine as claimed in claim 1. Preferred embodiments and non-trivial variations of the present invention are the subject matter of the dependent claims.

It will be immediately obvious that numerous variations and modifications (for example related to shape, sizes, arrangements and parts with equivalent functionality) could be made to what is described, without departing from the scope of the invention as appears from the enclosed claims.

The present invention will be better described by some preferred embodiments thereof, provided as a non-limiting example, with reference to the enclosed drawings, in which:

- Figure 1 shows a schematic view of the major principle on which the turbine of the invention is based;
- Figure 2 shows a schematic view similar to Figure 1, applied to the practice of the inventive turbine;
- Figure 3 shows a side schematic view of an embodiment of a turbine according to the prior art;
- Figure 4 shows a side schematic view of a preferred embodiment of the turbine according to the present invention;
- Figure 5 shows a top schematic view of a preferred embodiment of the turbine according to the present invention;
- Figure 6 shows a top schematic view of another preferred embodiment of the turbine according to the present invention;
- Figures 7a and 7b show front perspective views of a practical embodiment of the turbine of Figure 5;
- Figures 8a and 8b show front perspective views of a practical embodiment of the turbine of Figure 6;
- Figure 9 shows a side schematic view of a further variation of the turbine according to the present invention;
- Figure 10 shows a front perspective view of another variation of the turbine according to the present invention;
- Figure 11 shows a schematic drawing of the reference principle of physics; and
- Figure 12 shows the prototype on which the operating principle of physics has been proven (from a mechanical point of view) on which the present invention is based.

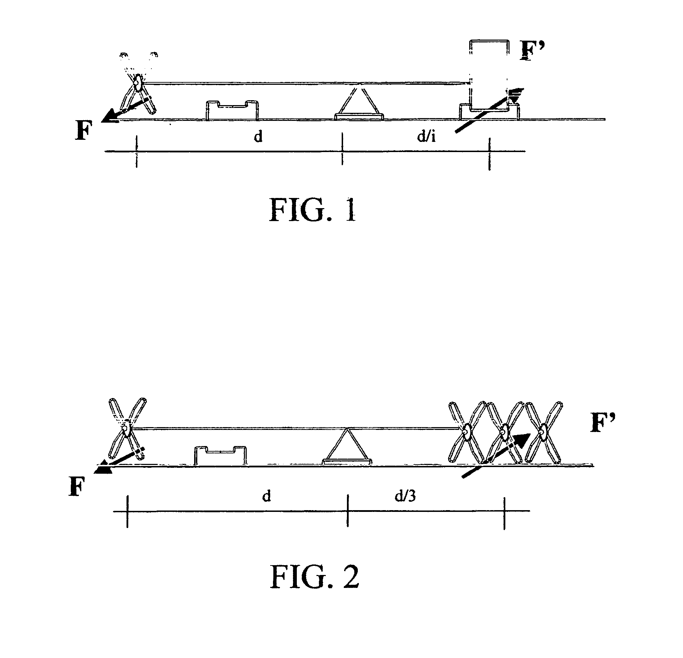

With reference firstly to Figure 1, the principles of physics that are the base of the inventive turbine will be briefly described.

Therefore, with particular reference to Figure 1, it is possible to note a classical millstone moved by a pushing element (for example a monkey) in which the following vectors are shown: the force component (F) at the foot of the monkey hoof, and the force component (F') at the foot of the millstone, taking into account that the monkey pushes the bar at a distance D from the fulcrum and the millstone is pushed at a distance D/i (for i > 1) from the fulcrum itself. The monkey therefore moves with a certain frequency of steps and therefore with a Rpm (rad/s) thereof; the millstone is pushed with an angular displacement Rpm' (rad'/s) thereof.

Therefore, the relationship linking the balance of powers with respect to the fulcrum is as follows:

$$Fxbx\frac{Rad}{s}xDx\Omega = F'xb'x\frac{Rad'}{s}x\frac{D}{i}x\Omega$$

where b is the length of the monkey leg and b' is the millstone radius; $\Omega$ is the angular displacement of monkey and millstone with respect to the fulcrum. The component $\Omega$ is simplified and, in the following formulas, it is neglected. From above, the following is obtained:

$$F'xb'x\frac{Rad'}{s} = Fxbx\frac{Rad}{s}xi$$

namely, the power that moves the millstone is the monkey power multiplied by i. By replacing, in the millstone, other monkeys with the same power of the pushing monkey, what is shown in Figure 2 is obtained, in which a monkey at d/3 pushes 3 monkeys with the same power as the pushing monkey; as will be described below in more detail, one of these monkeys in the improved turbine will be used to supply the pushing monkeys and the other 2 will provide power to be used for any other type of job, such job and therefore power obtained at very low costs and without any environmental impact.

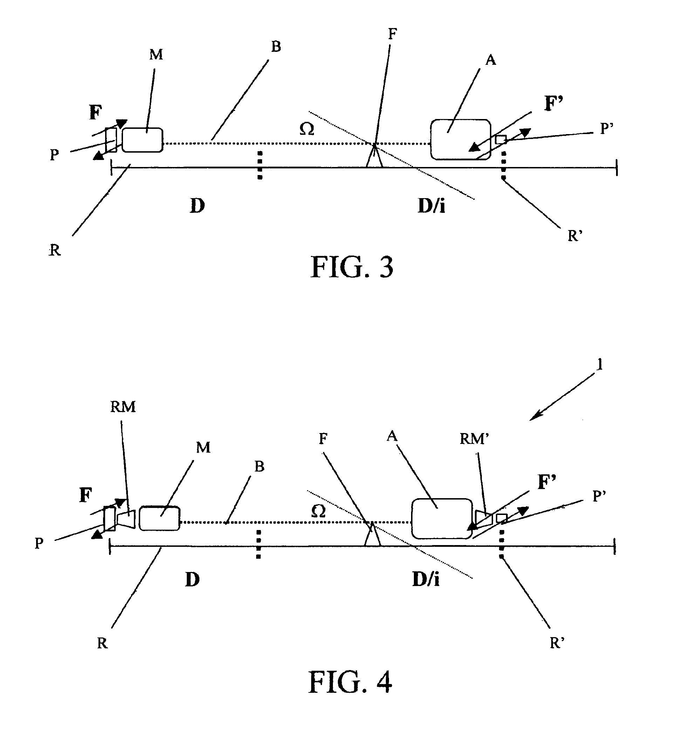

Figure 3 shows a "millstone" in an electric version according to a prior art diagram composed of a bar B hinged in a fulcrum F, at one end of the bar B a motor (for example an electric motor) M being secured, and at another end (shorter side) a power supplier A (for example an alternator) being secured. The pulley P of the motor M engages and discharges it power onto a fixed wheel R (corresponding to the groove of the pushing monkey). The pulley P' of the alternator A instead discharges its power onto a reduction fixed wheel R' (corresponding to the millstone groove). The motor M, when it is turned on, roto-translated and moves the bar B by a radiant angle $\Omega$/s and pushes from the other side the alternator A always by the same angular displacement $\Omega$/s. At that time, it is fundamental to establish the relationship between the force components of the motor torque (F) and the force component of the alternator torque (F').

Analogously to what has been described previously, the formula linking the Force components becomes:

$$Fxbx\frac{Rad}{s}xD = F'xb'x\frac{Rad'}{s}x\frac{D}{i}$$

from which the following is obtained:

$$F'xb'x\frac{Rad'}{s} = Fxbx\frac{Rad}{s}xi$$

where:

   F: force component of the motor pulley torque;
   b: arm component of the motor pulley torque;

$\frac{Rad}{s}$ : angular displacement of motor pulley;

   D: distance of the motor pulley from the fulcrum;
   F': force component of the alternator pulley torque;
   b': arm component of the alternator pulley torque;

$\frac{Rad'}{s}$ angular displacement of the alternator pulley;

   i: turbine reduction coefficient (numerical value > 1).

For an easy computation, supposing that $b'=\frac{b}{i}$ , $\frac{Rad'}{s} = \frac{Rad}{s}$ is obtained, so that the previously-stated formula becomes:

$$Fxbx\frac{Rad}{s}xD = F''x\frac{b}{i}x\frac{Rad}{s}x\frac{D}{i}$$

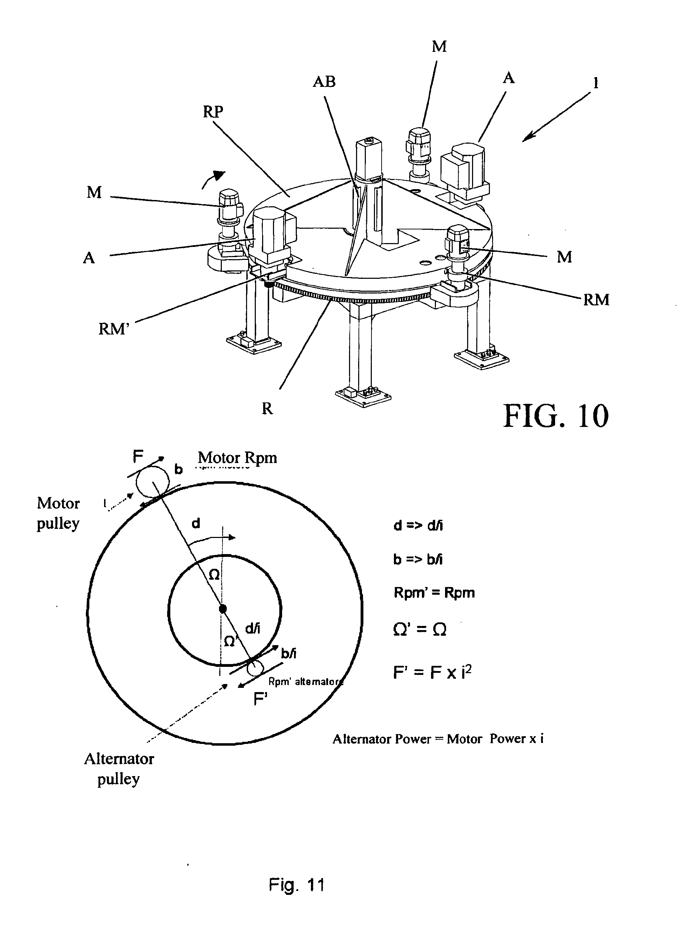

from which the following is obtained: $F'= Fxi^2$ from which Alternator Power = Motor Power x i $= Fxi^2x\frac{b}{i}x\frac{Rad}{s}$ is obtained (as shown in Figure 11).

The above equation is also justified by the following considerations. Always with reference to Figure 3, the motor M through its pulley P roto-translates with respect to the fulcrum F and pushes the alternator A to roto-translate. The motor power is therefore transformed into kinetic energy and the same occurs for the alternator A. At that time, assuming that, with respect to the fulcrum F, there is a balance of kinetic energies in the same time unit, and therefore an equivalence between kinetic energy on motor side (Ec) and kinetic energy on alternator side (E'c), the following is obtained:

$$Ec = E'c$$

So far nothing new has occurred, but it is fundamental to establish which is the motor pushing power to express Ec and which is the alternator power to express the same kinetic energy (E'c) on an angular speed reduced by i. Therefore:

$$Ec\ motor = E'c\ alternator$$

To state it in more detail, kinetic energies are expresses as if they were due to roto-translating bodies with mass m and $m_1$ (motor and alternator pulleys) related to the "torque deviation" with the respective fixed wheels. The formula becomes:

$$\frac{1}{2}mV^2 + \frac{1}{2}I\ Rpm^2 = \frac{1}{2}m_1V_1^2 + \frac{1}{2}I_1\ Rpm_1^2$$

where:

m and $m_1$ are respectively the roto-translating masses dragged by motor and alternator (respective pulleys);
V and $V_1$ are respectively the angular speeds of motor and alternator;
I and $I_1$ are respectively the inertial moments of the roto-translating masses of motor and alternator;
Rpm and $Rpm_1$ are respectively the angular displacements of the roto-translating masses.

Introducing in the previous formula the turbine reduction factor i, the following is obtained:

$$V_1 = \frac{V}{i}\quad b' = \frac{b}{i}\quad Rpm_1 = Rpm$$

By replacing, the following is obtained:

4

$$\frac{1}{2}mV^2 + \frac{1}{2}I\ Rpm^2 = \frac{1}{2}m_1\left(\frac{V}{i}\right)^2 + \frac{1}{2}I_1\ Rpm^2$$

From this formula, it is obtained that $m_1 = m \times i^2$, also because anyway the kinetic energies being used are function of the square of the speed, so that the alternator power is equal to:

$$\text{Alternator Power} = m_1 \times V_1 \times g = \frac{mxi^2 x \dfrac{V}{i} xg}{} =$$

$$\text{Motor Power x i,}$$

where g = gravity acceleration.

This demonstrates that the alternator at a reduced angular speed (V/i) in order to express the same kinetic energy of the motor that roto-translates, expresses a power equal to the motor power multiplied by i (turbine reduction factor).

Instead, with reference to Figure 4, is it possible to note a first preferred embodiment of the improved turbine 1 according to the present invention that has, as can be seen afterwards, different improvements with respect to what has been proposed by the previously-described prior art turbines.

Starting from a turbine having the above described components, a first improvement that the turbine 1 according to the present invention has is of a mechanical type, since it further comprises at least one first reducer RM, preferably of the mechanical type, interposed between the motor M and the respective pulley P, and at least one second reducer RM', preferably of a mechanical type, interposed between at least one power supplying means A (for example an alternator) and the respective pulley P'. If the two reducers RM, RM' have the same reduction coefficient, the angular displacement (Ω/s) of the motor M is the same as the angular displacement of the alternator A. The usefulness of these reducers RM, RM' is fundamental, since it allows strongly reducing the angular displacement Ω/s of the motor M and of the alternator A, thereby reducing the mechanical stresses of the turbine 1: moreover, with the reducers RM, RM', the sizes of the turbine 1 can be strongly reduced. The use of the reducers RM, RM' takes to another big improvement within the turbine efficiency: in fact, by offsetting the reduction coefficients between the first reducer RM cooperating with the motor M and the second reducer RM' cooperating with the alternator A, and in particular if the second reducer RM' has a greater reduction coefficient than the one of the first reducer RM, an angular displacement at the second Ω of the alternator A will correspond to an angular displacement at the second Ω of the motor M, but the alternator power will be increased by a (for a>1). The coefficient a is the relationship between alternator reduction coefficient / motor reduction coefficient. In this way, the power component of the alternator A increases by coefficient a since the previously-described formula becomes as follows:

$$Fxbx\frac{Rad}{s}xD = F'xb'x\frac{Rad'}{s \times a}x\frac{D}{i}$$

Alternator Power = Motor Power x i x a, where a = alternator reduction coefficient/motor reduction coefficient.

In this respect, the turbine 1 according to the present invention can have an efficiency even greater than 30% with respect to the prior art turbine shown in Figure 3.

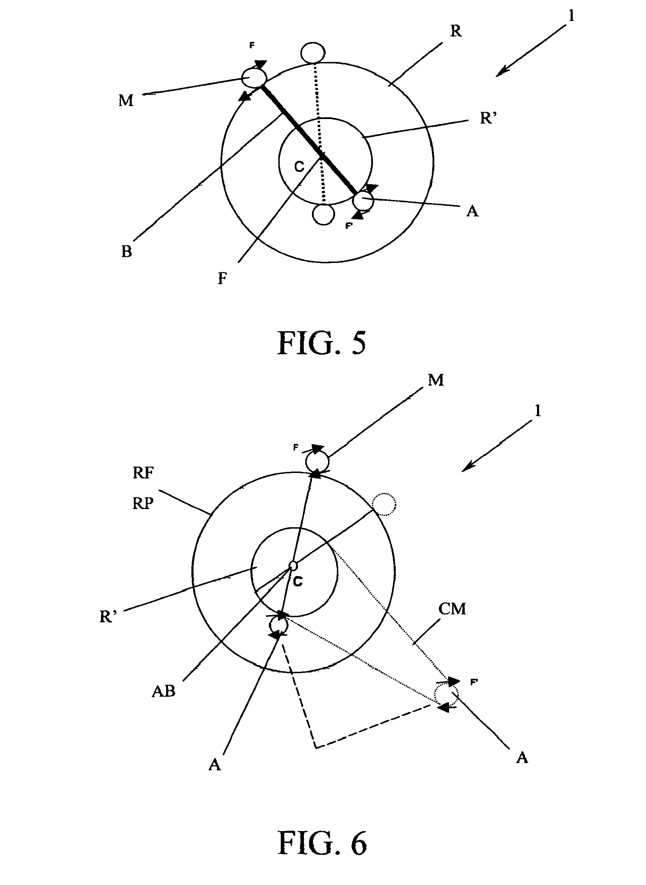

Figure 5 schematically shows the turbine 1 according to the present invention seen from the top: therefore, it comprises a bar B hinged and rotating around a fulcrum F, at whose ends a motor (for example an electric motor) M and a power supplier A (for example an alternator) are connected: for easiness, only the respective pulleys are shown with their respective force torques. It further comprises the fixed wheel R on which the pulley of the motor M is pivoted and a reducing fixed wheel R' on which the pulley of the alternator A is pivoted. When the motor M is turned on, the same roto-translates and pushes also the alternator A to roto-translate. The power "reduction" allows the alternator to express a power multiplied by the reduction i, exactly as described before.

Figure 6 instead shows another preferred embodiment of the turbine 1 composed of a fixed wheel RF and a power wheel RP, more or less of the same diameter of the fixed wheel and on which the motor M is secured, and a shaft AB, orthogonal to the wheels, a reduction wheel R' also fastened to the shaft AB of the turbine 1 and the alternator A, this time in a fixed location, with its pulley directly fastened to the reduction wheel or in a fixed location with the alternator pulley connected to the reduction wheel through a belt or chain or other mechanical connection device CM. When the motor M is turned on, it starts roto-translating and impresses an angular displacement to the power wheel RP and the reduction wheel R' discharging the power multiplied by the reduction i of the turbine 1 to the alternator A pulley without modifying the previously-described physics concepts.

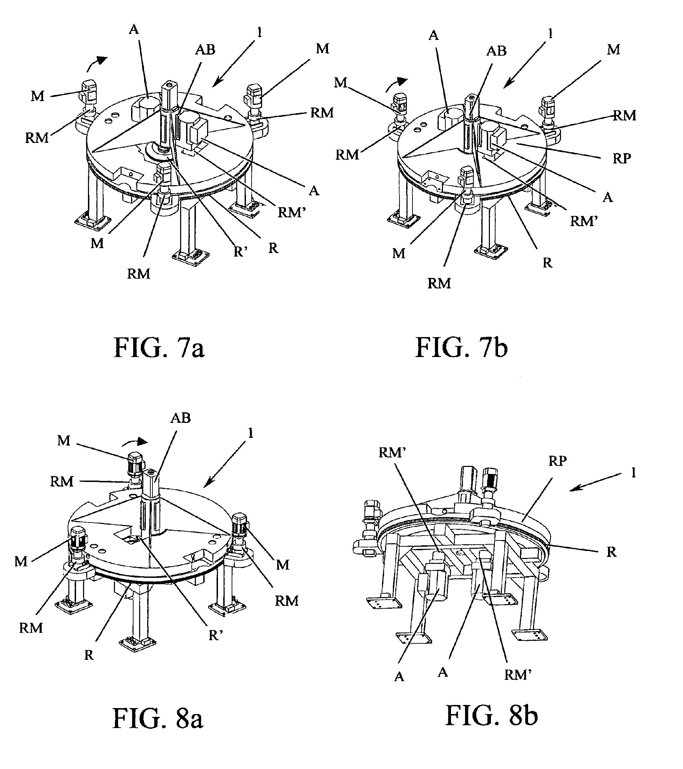

Figures 7a, 7b and 8a, 8b show two engineered versions of the turbine 1 according to the present invention, respectively according to the configurations of Figures 5 and 6, on which the Applicant has proven the above-described operating principles, above all in terms of friction estimation. In particular, the construction design of the turbine 1 of Figures 7a, 7b and 8a, 8b comprises three 1.5-kW motors and two 8-KVA alternators, and the reduction coefficient of the turbine is 4. In particular, in the turbine 1 of Figures 7a and 7b, there are three motors M with reducers RM and toothed pulleys that roto-translate once they are turned on. A reduction wheel R', also toothed and fastened to the supporting structure of the turbine 1, is placed below the power wheel RP. A power wheel RP fastened to the shaft AB and that is secured to the three motors M, that through the roto-translation of the motors M themselves is subjected to an angular displacement, rotates the shaft AB to which it is secured and drags in roto-translation also the alternators A also fastened onto the power wheel RP. Also the alternators A are equipped with reducers RM' with a reduction coefficient equal to the one of the reducers RM of the motors M. The pulleys of the motors M engage the fixed wheel R and, once turned on, impress an angular displacement to the power wheel RP, to the shaft AB and to the alternators A themselves. The pulleys of the alternators A roto-translate together with the alternators A due to their meshing with the reduction wheel R' that is fastened to the metallic supporting structure of the turbine 1 (under the power wheel RP). The design data could also be as follows:

- motors: total KW 3.3; V = 400; A. consumed = 8.1; Rpm = 1390; b = 60.43 cm;
- alternators: total KVA 14.0 ; V = 400; A max produced = 20.19; Rpm' = 1500; b' = 8 cm;
- i = turbine reduction = 7;
- reduction coefficient of alternator and motor reducers = 90;
- turbine angular displacement (angular displacement of motors with respect to shaft) = Rpm" = 0.07 revolutions/ second;
- fixed wheel diameter = 222.22 cm;
- power wheel diameter = 222.22 cm;
- reduction wheel diameter = 31.75 cm;
- total estimated efficiency = 0.85 x 0.85 x 0.85 x 0.85 x 0.75 = 0.391 (0.85 is due to the load loss due to every reducer and every gear; 0.75 is the alternator efficiency);
- produced KVA = 3.3 KW x 7 x 0.391 = 9.043;
- A produced by the alternator = 13.04;
- net efficiency (output A / input A) = 160 %.

The turbine motors are turned on and gradually pushed at steady state through an inverter: in this way, structural stresses are avoided and a right angular displacement is given to the alternator pulley (Rpm').

The turbine 1 of Figures 8a and 8b comprises three motors M with reducers RM and roto-translating toothed pulleys, a fixed, also toothed, wheel R, a power wheel RP fastened to the shaft AB and that is fastened to the motors M and that, through their roto-translation, rotates together with the shaft AB, a toothed reduction wheel R', that this time is fastened to the vertical shaft AB and that rotates therewith due to the roto-translation effect of the motors M that drag the power wheel RP. The alternators A, equipped with reducers RM', this time are in a fixed position and fastened to the supporting structure of the turbine 1 itself. The reduction coefficient of the reducer RM' of the alternator A is the same as the one of the reducers RM of the motors M. The pulleys of motors M engage the fixed wheel R and, once being turned on, impress an angular displacement to the power wheel RP, to the shaft AB and to the reduction wheel R'. The reduction toothed wheel R' discharges the power multiplied by the reduction coefficient of the turbine (i) on the toothed pulley of the alternator A that this time is in a fixed location. The design data could be as follows:

- motors: total KW 3.3; V = 400; A consumed = 8.1; Rpm = 1390; b = 60.43 cm;
- alternators: total KVA 14.0; V = 400; A max produced = 20.19; Rpm' = 1500; b' = 8 cm;
- i = turbine reduction = 7;
- reduction coefficient of alternator and motor reducers = 90;
- turbine angular displacement = Rpm" = 0.07 revolutions/second;
- fixed wheel diameter = 222.22 cm;
- power wheel diameter = 222.22 cm;

- reduction wheel diameter = 31.75 cm;
- total estimated efficiency = 0.85 x 0.85 x 0.85 x 0.85 x 0.75 = 0.391 (0.85 is due to the load loss due to every reducer and every gear; 0.75 is the alternator efficiency);
- produced KVA = 3.3 KW x 7 x 0.391 = 9.043;
- A produced by the alternator = 13.04;
- net efficiency (output A / input A) = 160 %.

Also in this case, the turbine motors are turned on and gradually pushed to steady state by an inverter that allows avoiding structural stresses and to give a correct angular displacement (Rpm') to the alternator pulley.

The technical choice between the turbines 1 according to the present invention, shown in Figure 7a, 7b and 8a, 8b, depends on the final efficiency. To obtain the best efficiency according to inertias in play, sometimes it is more convenient to roto-translate the alternators and keep the reduction wheel fixed, while sometimes it is more convenient to rotate the reduction wheel and keep the power suppliers in a fixed location.

By offsetting the reduction coefficient between alternator and motor reducers, for example by setting the alternator coefficient equal to 120 and the motor coefficient equal to 90, it is obtained that the previously-described coefficient is equal to 120/90 = 1.33 so that the total efficiency is 210%. Obviously, in this case, the sizes of every single piece of the turbine must be reviewed.

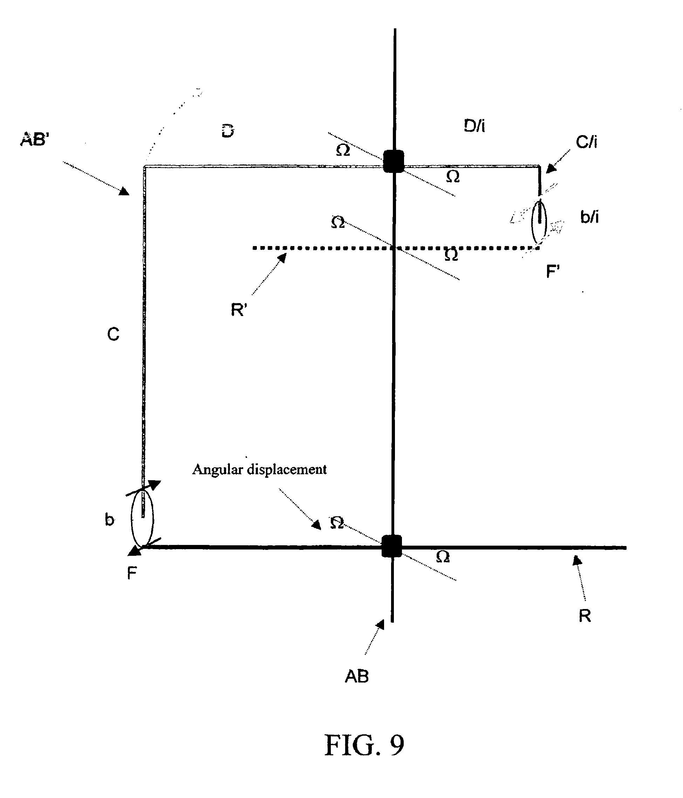

A further improvement that highly increases the above-described efficiencies is schematically shown in Figure 9, in which a turbine 1 according to the present invention is shown, composed of a vertical shaft AB and a portal-type shaft AB' rotating around such shaft AB and composed of a first horizontal element, having a length D corresponding to a second horizontal element, having a length D/i (for i > 1), where i designates the reduction coefficient of the turbine, of a first vertical element having a length C corresponding to a second vertical element having a length C/i (for i>l). For easiness, the reduction coefficients both of the first horizontal element and of the first vertical element have the same value, but they can also be mutually different. At the end of the first vertical element, the motor is fastened (Figure 9 only shows the pulley with its force torque F), while at the end of the second vertical element an alternator is fastened (Figure 9 shows only the pulley with its force torque F'). The motor pulley engages a fixed wheel R and the alternator pulley engages a reduction fixed wheel R'. Once having turned on the motor and pushed it at steady state progressively through an inverter, the portal-type shaft AB' is subjected to an angular displacement (Ω/s) and the relationship between motor and alternator powers is as follows:

$$Fxbx\frac{Rad}{s}xDxC = F'xb'x\frac{Rad'}{s}x\frac{D}{i}x\frac{C}{i}$$

from which, Alternator Power = Motor Power x i$^2$ is obtained.

In this example, the coefficient i is the same for both elements of the portal-type shaft, but actually they could be different. The improvement, from the point of view of efficiencies of this asset, is clear, and, in a short time, efficiencies equal to 2,500 ÷ 3,000 % could be obtained (setting i = 10). Also for this variation of the turbine 1 what has been described previously is valid, namely that reducers can be usefully employed on motors and on alternators. By offsetting the reduction coefficients of the reducers and in particular by increasing those assembled on the alternators, the above formula becomes, as previously stated:

```
Alternator Power = Motor Power x i² x a
```

where a is the relationship between alternator reduction coefficient / motor reduction coefficient. Also in this case, for easiness, a single motor and a single alternator have been show, but it is obvious that more motors and more alternators can be used; in this case, the shafts can be replaced by two cylinders with different heights.

Another possible variation of the turbine 1 according to the present invention is shown in Figure 10, in which both motor M and its respective alternator A are fastened to the power wheel RP and roto-translate with respect to the central shaft AB. In practice, the motors M drag the alternators A on the same power wheel RP. The efficiency of the turbine 1 is greater than 100% without the frictions, if the reducers RM, RM' are offset and, more precisely, if the reduction coefficient of the reducers RM' of the alternators is strongly increased with respect to the one of the reducers RM of the motors M. The system works since, to an angular displacement of the motors M at the second (Ω) an angular displacement corresponds, at the second, actual of the alternators A equal to Ω, but the power on the alternator A, as previously stated, is increased by a (for a > 1) where a corresponds to the relationship between alternator A reduction coefficient and motor M reduction coefficient, so that, as previously stated, the power expressed by the alternators is equal to:

$$Fxbx\frac{Rad}{s}xD = F'xb'x\frac{Rad'}{s \times a}xD$$

```
Alternator  Power  =  Motor  Power  x  a
```

where a = alternator reduction coefficient /motor reduction coefficient.

As last variation of the turbine 1 of the present invention, it can be stated that the power suppliers (for example the alternator) can be directly applied to the central shaft of the turbine by interposing a suitable reducer. In this case, the diameter of the reduction wheel is the diameter of the turbine shaft. If the reduction coefficient of the turbine (i) is very high, it is almost impossible to keep ion the power supplier a reducer that has the same reduction coefficient of the motor. In this case, the offset between the reduction coefficient of the power supplier reducer and the reduction coefficient of the motors does not come into play in the previously-described formula, and the previously-described coefficient a must not be taken into account. The formula in this case is:

$$Fxbx\frac{Rad}{s}xD = F'xb'x\frac{Rad'}{s}x\frac{D}{i}$$

Power Supplier Power = Motor Power x i

And in this case the reduction coefficient i of the turbine can assume quite high values.

Figure 12 shows the first operating prototype, which has been produced and used by the inventor for mechanical energy measures, and on which the above-described principles of physics have been proven valid.
Technical data:

-    Motor: 230/400 V
-    Maximum motor power: 1100 W
-    Motor Rpm = 1000 revolutions/minute
-    Motor weight = 150 kg
-    Motor operating frequency: 15 Hz
-    Motor supply from inverter with voltage 230 V and at a frequency of 15 Hz
-    Maximum delivered mechanical motor power: 330 W
-    Mechanical torque loaded on the shaft with screwed ballasts and dragged by the motor equal to 700 nm
-    Turbine shaft Rpm = 26 revolutions/minute
-    Mechanical power measured and referred to the shaft = 1904 W
-    Mechanical efficiency = 1904/330 = 570%

The inventor has not loaded the turbine shaft to its limit, so that the mechanical efficiency on the shaft is much higher, but he only has wanted to demonstrate that, on the same, the mechanical motor power, transformed into kinetic energy, gets multiplied. With these measures, the principles of physics on which the invention is bases have already been demonstrated.

It is further possible to experiment also the electric measures, by applying an alternator to the prototype, next to the turbine shaft and through a suitable reducer.

The turbine 1 according to the present invention can obviously be subjected to numerous other variations within reach of a skilled person in the art. For example, it is possible to provide for the presence of many motors and many power suppliers, many wheels, many shafts, etc., without thereby departing from the scope of the present invention. Moreover, electric versions (electric motors - alternators), pneumatic versions (pneumatic motors - compressors), hydraulic versions (hydraulic motors - pump assembly and tanks) can be provided for the same turbine 1 according to the present invention.

All these types of turbines 1 at efficiencies much greater than 100% are turbines that can have different nameplate data, can range from small powers to high powers and are alternative to all traditional turbines and motors. They have a practically null environmental impact, are self-supplying, and do not burn any fuel. For their operation, in fact, it is enough to have air in a quiet state, water at free height and unmoving or self-produced electricity. Energy produced in excess can be aimed for performing any type of work and transformed under any form of energy at the only cost of building the turbines and keeping them efficient. It is not necessary any more to centralise the energy production, but only to directly locate it by the end user and, if necessary, to create a small connection network between the turbines themselves. All above-described turbines have a high efficiency and can replace the traditional turbines with combustion and supplied with oil-, coal-, nuclear-energy-based products, etc. On the contrary, it can be stated that the energy produced by renewable sources, though being fundamental for turning on the turbines according to the present invention, after some time could result not mandatory.

**Claims**

1. Turbine (1) comprising a supporting structure, at least one motor (M) supported by said supporting structure, at least one power supplying means (A), at least one rotary shaft (AB) or bar (B), at least one fixed wheel (R) connected to said motor (M), at least one power-reduction wheel (R') connected to said power supplying means (A), **characterised in that** it further comprises at least one first reducer (RM) interposed between said motor (M) and said fixed wheel (R) and a second reducer (RM') interposed between said power supplying means (A) and said reduction wheel (R').

2. Turbine (1) according to claim 1, **characterised in that** said fixed wheel (R) is connected to said motor (M) through at least one first pulley (P) and said reduction wheel (R') is connected to said power supplying means (A) through at least one second pulley (P'), said first reducer (RM) being interposed between said motor (M) and said first pulley (P) and said second reducer (RM') being interposed between said power supplying means (A) and said second pulley (P').

3. Turbine (1) according to claim 1, **characterised in that** it comprises at least one power wheel (RP) applied onto said shaft (AB) coaxially with respect to said fixed wheel (R).

4. Turbine (1) according to claim 2, **characterised in that** said bar (B) is hinged in a fulcrum (F), said motor (M) being secured to one end of said bar (B), and said power supplying means (A) being secured to another end of said bar (B), said first pulley (P) engaging and discharging its power onto said fixed wheel (R) and said second pulley (P') engaging and discharging its power onto said reduction wheel (R').

5. Turbine (1) according to claim 1, **characterised in that** said reduction wheel (R') is connected to said power supplying means (A) through at least one mechanical connection device (CM).

6. Turbine (T) according to claim 1, **characterised in that** said motor (M) is an electric motor (M) and said power supplying means (A) are composed of at least one alternator (A).

7. Turbine (T) according to claim 1, **characterised in that** said motor (M) is a compressed-air pneumatic motor and said power supplying means (A) are composed of at least one compressor.

8. Turbine (T) according to claim 1, **characterised in that** said motor (M) is an hydraulic motor and said power supplying means (A) are composed of at least one pump assembly and related tank.

9. Turbine (T) according to claim 1, **characterised in that** it comprises at least one portal-type shaft (AB') rotating around said shaft (AB) and composed of at least one first horizontal element having a length D, at least one second horizontal element having a length D/i, at least one first vertical element having a length C and at least one second vertical element having a length C/i, i being the reduction coefficient of said turbine (1), said motor (M) being connected to an end of said first vertical element and said power supplying means (A) being connected to an end of said second vertical element.

10. Turbine (T) according to claim 1, **characterised in that** said first reducer (RM) and said second reducer (RM') have the same reduction coefficient.

**11.** Turbine (T) according to claim 1, **characterised in that** said first reducer (RM) and said second reducer (RM') have offset reduction coefficients.

**12.** Turbine (T) according to claim 1, **characterised in that** said at least one power supplying means (A) are directly placed on the shaft (AB) of the turbine (1).

**F'**

**F**

d          d/i

# FIG. 1

**F'**

**F**

d          d/3

# FIG. 2

FIG. 3

FIG. 4

FIG. 5

FIG. 6

FIG. 7a

FIG. 7b

FIG. 8a

FIG. 8b

FIG. 9

**FIG. 10**

$d => d/i$

$b => b/i$

$Rpm' = Rpm$

$\Omega' = \Omega$

$F' = F \times i^2$

Alternator Power = Motor Power x i

Fig. 11

FIG. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IT 1344889

- WO 2005047695 A